# EUROPÄISCHE PATENTANMELDUNG

(11) **EP 2 573 897 A2**
(43) Veröffentlichungstag der Anmeldung: **27.03.2013**
(21) Anmeldenummer: 12185012.7
(22) Anmeldetag: 19.09.2012
(51) Int. Cl.: H02J 3/38

(54) **Anordnung zum Betreiben mindestens eines Verbrauchers mit der elektrischen Leistung einer regenerativen Energiequelle**

(30) Priorität: 20.09.2011 DE 202011051377 U; 27.06.2012 DE 202012102364 U
(71) Anmelder: Stiehle GmbH, 77534 Hayingen (DE)
(72) Erfinder: Stiehle, Friedrich, 72534 Hayingen (DE)
(74) Vertreter: Kohler Schmid Möbus

(57) **Zusammenfassung**

Die Erfindung betrifft eine Anordnung (1) zum Betreiben eines Verbrauchers (12), z.B. einer Elektro-Heizung für einen Gebrauchswasser-Speicher, mit elektrischer Leistung einer regenerativen Energiequelle (13), z.B. einer Photovoltaikanlage, umfassend: eine Schalt-Einrichtung (SG) mit: einer Vergleichseinrichtung (14) zum Vergleichen eines Ist-Leistungs-Werts der von der Energiequelle (13) gelieferten Leistung mit einem Soll-Leistungs-Wert des Verbrauchers (12), einem Umschalter (16), sowie eine Steuereinrichtung (15) zum Verbinden eines Eingangs (E) des Umschalters (16) mit einem Ausgang (A2) des Umschalters (16), wenn der Ist-Leistungs-Wert den Soll-Leistungs-Wert überschreitet, ein Umschalt-Relais (UR), umfassend: einen mit dem Ausgang (A2) des Umschalters (16) verbundenen Steuereingang (SE) zum Umschalten zwischen einem ersten und einem zweiten Schaltzustand des Umschalt-Relais (UR), sowie einem ersten Schaltelement (S1) zur Trennung des Verbrauchers (12) von der Energiequelle (13) in dem ersten Schaltzustand sowie zur Verbindung des Verbrauchers (12) mit der Energiequelle (13) in dem zweiten Schaltzustand. Die Anordnung (1) weist ein Betätigungselement (18) zum manuellen Umschalten des Umschalt-Relais (UR) von dem zweiten Schaltzustand in den ersten Schaltzustand zur Trennung des Verbrauchers (12) von der Energiequelle (13) und/oder eine Betätigungseinrichtung (S) zum manuellen Betätigen des Umschalt-Relais (UR) zum Umschalten von dem ersten Schaltzustand in den zweiten Schaltzustand auf, wobei das Umschalten jeweils unabhängig vom Ist-Leistungs-Wert der Energiequelle (13) erfolgt.

## Beschreibung

Die Erfindung betrifft eine Anordnung zum Betreiben eines elektrischen Verbrauchers, beispielsweise einer Elektro-Heizung für einen Gebrauchswasser-Speicher, mit der elektrischen Leistung einer regenerativen Energiequelle, beispielsweise einer Photovoltaikanlage, Windkraftanlage oder einer anderen Energiequelle mit zeitlich schwankender Leistung, umfassend: eine Schalt-Einrichtung, welche umfasst: eine Vergleichseinrichtung zum Vergleichen eines Ist-Leistungs-Werts der von der Energiequelle gelieferten Leistung mit einem Soll-Leistungs-Wert des Verbrauchers, einen Umschalter, sowie eine Steuereinrichtung zum Verbinden eines Eingangs des Umschalters mit einem Ausgang des Umschalters, wenn der Ist-Leistungs-Wert den Soll-Leistungs-Wert überschreitet.

Üblicher Weise wird die von einer regenerativen Energiequelle, beispielsweise von einer Photovoltaikanlage, gelieferte Energie bzw. Leistung direkt in das öffentliche Stromnetz eingespeist. Das am 1. Januar 2009 in Kraft getretene Erneuerbare-Energien-Gesetz sieht beim Betreiben einer Photovoltaikanlage (PV-Anlage) eine Vergütung für den Eigenverbrauch des durch die PV-Anlage erzeugten Stroms vor, die gegenüber der Einspeisung des von der PV-Anlage erzeugten Stroms in das öffentliche Stromnetz einen wirtschaftlichen Vorteil bietet. Grundsätzlich wird daher eine PV-Anlage mit der größten Wirtschaftlichkeit betrieben, wenn der Betreiber von der erzeugten elektrischen Leistung der PV-Anlage so viel wie möglich selbst verbraucht und die Strom-Netze der Energie-Versorgungs-Unternehmen entlastet.

Mit der regenerativen Energie der PV-Anlage kann beispielsweise eine Änderung des Energie-Trägers in Heizungsanlagen der Haustechnik erfolgen, also eine Umstellung von Öl (bzw. Gas) auf eine Stromversorgung mit Eigenstrom. Als erster Schritt kann hierbei beispielsweise die Erwärmung von Gebrauchs-Warmwasser durch Solarenergie mit Hilfe einer Elektro-Heizung erfolgen.

Von der Firma Kaco new energy GmbH werden unter dem Namen "Powador®" Wechselrichter für Photovoltaikanlagen vertrieben. In einer auf der Homepage dieser Firma unter "http://kaconewenergy.de" abrufbaren "Bedienungsanleitung Powador 2500xi-5000xi" wird ein Wechselrichter mit einem Relais beschrieben, welches in einem ersten Schaltzustand (Ruhezustand) den Strom der PV-Anlage ins öffentliche Stromnetz einspeist und in einem zweiten Schaltzustand den Strom der PV-Anlage einem elektrischen Verbraucher im Hausnetz zur Verfügung stellt.

Um zu gewährleisten, dass die von der PV-Anlage bereitgestellte Leistung zum Betrieb des angeschlossenen Verbrauchers ausreicht, wird das Relais erst dann vom ersten in den zweiten Schaltzustand geschaltet, wenn während eines Zeitraums von 30 Minuten die vom Wechselrichter gelieferte Wechselspannung (Ist-Leistungs-Wert) über einer Einschaltschwelle (Soll-Leistungs-Wert) liegt. Das Relais verbleibt nach dem Umschalten für eine einstellbare Zeitdauer (zwischen einer Stunde und zehn Stunden) in dem zweiten Schaltzustand und wird erst nach dem Ablauf dieser Zeitdauer automatisch in den ersten Schaltzustand zurückgeschaltet, so dass der PV-Strom wieder dem öffentlichen Stromnetz zugeführt wird. Erst nach weiteren 30 Minuten kann ein erneutes Schalten in den zweiten Schaltzustand erfolgen.

Die Aktivierung einer Elektro-Heizung für die Erwärmung von Gebrauchs-Wasser kann über ein Lastrelais erfolgen, da ein Umschalten zwischen dem Betrieb mit Eigenstrom und Netz-Strom in der Regel unkritisch ist. Eine "Freischaltung" der elektrischen Energie einer PV-Anlage für einen Verbraucher über Lastrelais ist aber für bestimmte Verbraucher, insbesondere für Haushaltsgeräte wie Waschmaschinen, Trockner, Backöfen etc. in der Regel ungünstig: Eine Spannungsversorgung über eine solche "Freischaltung" führt typischer Weise nicht zu einem Anlaufen z.B. einer Waschmaschine, da deren Aktivierung in der Regel manuell, z.B. durch eine Schalterbetätigung, erfolgt. Auch ist es erforderlich, die Einstellung des Waschprogramms bzw. die Programmierung der Waschmaschine unter Netz-Spannung durchzuführen. Zudem sollte ein laufendes Waschprogramm nicht unterbrochen werden, was bei einer Schaltung über ein Lastrelais denkbar und möglich wäre.

Für den Nutzer der PV-Anlage (häufig in der Funktion der Hausfrau) ist es somit günstig, den Zustand der PV-Anlage einfach erkennen zu können, um eine optimale Nutzung der erzeugten regenerativen Energie zu gewährleisten und die vorhandene regenerative Energie seinen Bedürfnissen entsprechend gezielt einzusetzen.

### Aufgabe der Erfindung

Es ist daher die Aufgabe der vorliegenden Erfindung, den Betrieb unterschiedlicher Verbraucher mit der Leistung der regenerativen Energiequelle (Öko-Strom) dem individuellen Bedarf eines Bedieners anzupassen. Insbesondere kann auch der Leistungs- und Schaltzustand der regenerativen Energiequelle (insbesondere einer PV-Anlage) in einfacher Weise erkennbar gemacht werden.

### Kurze Beschreibung der Erfindung

Diese Aufgabe wird gelöst durch eine Anordnung der eingangs genannten Art, weiter umfassend: ein Umschalt-Relais, umfassend: einen mit dem Ausgang des Umschalters verbundenen Steuereingang zum Umschalten zwischen einem ersten und einem zweiten Schaltzustand des Umschalt-Relais, einem ersten Schaltelement zur Trennung des Verbrauchers von der Energiequelle in dem ersten Schaltzustand und zur Verbindung des Verbrauchers mit der Energiequelle in dem zweiten Schaltzustand, sowie ein Betätigungselement zum manuellen Umschalten des Umschalt-Relais von dem zweiten Schaltzustand in den ersten Schaltzustand zur Trennung des Verbrauchers von der Energiequelle unabhängig vom Ist-Leistungs-Wert der Energiequelle und/oder eine Betätigungseinrichtung zum manuellen Betätigen des Umschalt-Relais unabhängig vom Ist-Leistungs-Wert der Energiequelle.

Durch das Betätigungselement wird erreicht, dass regenerative Energie (beispielsweise Photovoltaikenergie), die aufgrund von variablen Witterungsverhältnissen in einem bestimmten Betriebszeitpunkt zur Verfügung steht, durch die manuelle Betätigung des Betätigungselements gezielt einem oder mehreren Verbrauchern, zum Beispiel Haushaltsgeräten, zur Verfügung gestellt werden kann, statt diese regenerative Energie einem Verbraucher zur Verfügung zu stellen, der standardmäßig für den Bezug der regenerativen Energie vorgesehen ist.

Normalerweise schaltet das Umschalt-Relais in dem Zustand, in dem der Ist-Leistungswert größer als der Soll-Leistungswert ist, den (standardmäßig vorgesehenen) Verbraucher, beispielsweise die Elektro-Heizung, ein. Durch die Betätigung des Betätigungselements, das beispielsweise als Schalter ausgebildet sein kann, kann jedoch die Versorgung des standardmäßig vorgesehenen Verbrauchers mit der regenerativen Energie unterbrochen werden, so dass die regenerative Energie für andere Verbraucher, z.B. für Haushaltsgeräte, zur Verfügung steht. Die Aktivierung der anderen Verbraucher erfolgt typischer Weise manuell durch einen Bediener.

Zur Anzeige des Betätigungszustands des Betätigungselements kann eine Signalisierungseinrichtung vorgesehen sein. Die Signalisierungseinrichtung kann beispielsweise als eine Lampe bzw. Leuchte (z.B. eine oder mehrere LED-Leuchten), insbesondere als eine rot leuchtende Lampe bzw. Leuchte, ausgebildet sein, die zum Beispiel an dem Betätigungselement selbst angeordnet ist. Durch die Signalisierungseinrichtung wird dem Bediener der Anordnung visuell in einfacher und direkter Weise angezeigt, ob das Betätigungselement in einer Ruhe- bzw. Normalstellung (Signalisierungseinrichtung inaktiv bzw. rote Lampe leuchtet nicht) oder in einer Betätigungsstellung (Signalisierungseinrichtung aktiv bzw. rote Lampe leuchtet) befindet.

Die weiter oben beschriebene Betätigungseinrichtung zum manuellen Betätigen des Umschalt-Relais zum Umschalten vom ersten in den zweiten Schaltzustand unabhängig vom Ist-Leistungs-Wert der Energiequelle ermöglicht es einem Bediener durch Betätigen der Betätigungseinrichtung den Verbraucher, der beispielsweise als Elektro-Heizung ausgebildet sein kann, unabhängig von der momentan von der regenerativen Energiequelle gelieferten Leistung mit dieser und/oder mit einer weiteren Energiequelle, z.B. mit dem öffentlichen Stromnetz, verbinden. Durch die (manuelle) Betätigung der Betätigungseinrichtung, beispielsweise in Form eines Not-Schalters bzw. Test-Schalters (s.u.), kann eine Freischaltung des Verbrauchers erfolgen, auch wenn die zum Betrieb dieses Verbrauchers benötige Leistung nicht bzw. nicht vollständig von der regenerativen Energiequelle bereitgestellt wird und daher zumindest teilweise dem öffentlichen Stromnetz entnommen werden muss.

Die von der momentanen Leistung der regenerativen Energiequelle unabhängige Einschaltung ist insbesondere günstig, wenn es sich bei dem Verbraucher um eine Elektro-Heizung handelt, die zum Aufheizen eines Gebrauchswasser-Speichers genutzt wird. Die Einschaltung kann beispielsweise erfolgen, wenn die zur Aufheizung des Gebrauchswasser-Speichers verwendete Ladepumpe beschädigt bzw. das konventionelle Heizungs-System defekt ist, so dass trotz des Ausfalls der Ladepumpe die Warmwasserversorgung sichergestellt werden kann.

In einer Ausführungsform unterbricht das Betätigungselement beim manuellen Umschalten die Verbindung zwischen dem Ausgang des Umschalters und dem Steuereingang des Umschalt-Relais. Diese Unterbrechung stellt eine besonders einfache Möglichkeit für die Deaktivierung der Eigenstromversorgung des (standardgemäß vorgesehenen) Verbrauchers und der Zurverfügungstellung der regenerativen Energie für weitere Verbraucher (Haushaltsgeräte) dar. Ist die Verbindung zwischen dem Ausgang des Umschalters und dem Steuereingang des Umschalt-Relais durch das manuelle Betätigen des Betätigungselements unterbrochen, so kann die Information, dass der Ist-Leistungs-Wert größer als der Soll-Leistungs-Wert ist, nicht zu dem Steuereingang des Umschalt-Relais gelangen, wodurch das Umschalt-Relais von dem zweiten Schaltzustand des Umschalt-Relais in den ersten Schaltzustand des Umschalt-Relais zurückschaltet und dadurch den Verbraucher (z.B. die Elektro-Heizung) von der regenerativen Energiequelle trennt. Durch die Unterbrechung der Verbindung zwischen dem Ausgang des Umschalters und dem Steuereingang des Umschalt-Relais ist diese Verbindung stromlos bzw. sie führt kein Signal, so dass die Trennung des Verbrauchers von der Energiequelle unabhängig vom Ist-Leistungs-Wert der Energiequelle ist.

In einer weiteren Ausführungsform umfasst die Schalt-Einrichtung weiter: eine zweite Vergleichseinrichtung zum Vergleichen des Ist-Leistungs-Wertes mit dem Soll-Leistungs-Wert, einen zweiten Umschalter, eine zweite Steuereinrichtung zum Verbinden eines Eingangs des zweiten Umschalters mit einem Ausgang des zweiten Umschalters, wenn der Ist-Leistungs-Wert den Soll-Leistungs-Wert überschreitet, sowie eine zweite Signalisierungseinrichtung, die beim Verbinden des Eingangs mit dem Ausgang des zweiten Umschalters aktiviert wird. Bei dieser Ausführungsform wird dem Bediener in vorteilhafter Weise durch die zweite Signalisierungseinrichtung angezeigt, ob der Ist-Leistungs-Wert momentan größer ist als der Soll-Leistungs-Wert. Dies bedeutet, dass regenerative Energie in einem Maße zur Verfügung steht, das ausreicht, den standardmäßig vorgesehenen Verbraucher (z.B. eine Elektro-Heizung) zu nutzen, ohne dabei auf konventionelle Energiequellen, wie beispielsweise das öffentliche Stromnetz, zurückgreifen zu müssen. Ist die zweite Signalisierungseinrichtung inaktiv, so bedeutet das, dass momentan der Ist-Leistungswert kleiner ist als der Soll-Leistungswert, d.h. dass regenerative Energie nicht in ausreichender Menge bereitsteht und daher z.B. die Aufheizung von Gebrauchswasser über die Lade-Pumpe erfolgen kann, die vom öffentlichen Stromnetz gespeist wird. Der Zustand (aktiv / inaktiv) der zweiten Signalisierungseinrichtung wird typischer Weise nicht davon beeinflusst, ob der Gebrauchswasserspeicher bereits die gewünschte Temperatur erreicht hat oder nicht. Die zweite Signalisierungseinrichtung kann beispielsweise als eine Lampe oder Leuchte (z.B. eine oder mehrere LED-Leuchten), beispielsweise eine gelb leuchtende Lampe bzw. Leuchte, ausgebildet sein.

Bei einer weiteren Ausführungsform der Anordnung umfasst die Schalt-Einrichtung weiter: eine dritte Vergleichseinrichtung zum Vergleichen des Ist-Leistungs-Werts mit einem weiteren Soll-Leistungs-Wert, der größer ist als der Soll-Leistungs-Wert des Verbrauchers, einen dritten Umschalter, eine dritte Steuereinrichtung zum Verbinden eines Eingangs des dritten Umschalters mit einem Ausgang des dritten Umschalters, wenn der Ist-Leistungs-Wert den weiteren Soll-Leistungs-Wert überschreitet, sowie eine dritte Signalisierungseinrichtung, die beim Verbinden des Eingangs mit dem Ausgang des dritten Umschalters aktiviert wird. Bei dieser Ausführungsform wird dem Bediener in vorteilhafter Weise durch die dritte Signalisierungseinrichtung angezeigt, dass der Ist-Leistungs-Wert momentan größer ist als der weitere Soll-Leistungs-Wert.

Dies bedeutet, dass regenerative Energie in einem Maße zur Verfügung steht, das ausreicht, nicht nur den standardmäßig vorgesehenen Verbraucher, sondern alternativ oder zusätzlich weitere Abnehmer, wie beispielsweise Haushaltsgeräte, zu nutzen, ohne dabei auf konventionelle Energiequellen, wie beispielsweise das öffentliche Netz, zurückgreifen zu müssen. Die Höhe des weiteren Soll-Leistungs-Werts kann in der dritten Vergleichseinrichtung eingestellt werden, sodass sich die Anzeige der dritten Signalisierungseinrichtung individuell an die Gegebenheiten (beispielsweise an die erforderlichen Verbrauchsleistungen eines oder mehrerer Haushaltsgeräte) anpassen lässt. Die dritte Signalisierungseinrichtung kann beispielsweise als eine Lampe oder Leuchte (z.B. eine oder mehrere LED-Leuchten), beispielsweise als eine grün leuchtende Lampe bzw. Leuchte, ausgebildet sein.

Eine Weiterbildung dieser Ausführungsform umfasst ein Steuer-Relais, welches einen mit dem Ausgang des Umschalters der Steuereinrichtung verbundenen Steuereingang zum Umschalten zwischen einem ersten und einem zweiten Schaltzustand des Steuer-Relais aufweist, wobei in dem zweiten Schaltzustand die dritte Signalisierungseinrichtung aktiv ist.

Bei dieser Weiterbildung kann in vorteilhafter Weise die dritte Signalisierungseinrichtung aktiviert werden, wenn der standardmäßig für die Versorgung mit regenerativer Energie vorgesehene Verbraucher, z.B. eine Elektro-Heizung, nicht (mehr) genutzt wird. Ein solcher Fall kann beispielsweise eintreten, wenn das Gebrauchswasser durch den Aufwärmvorgang seine Ziel-Temperatur erreicht hat, so dass eine Überwachungseinrichtung (beispielsweise ein Thermostat) einen weiteren Betrieb des Verbrauchers, insbesondere der Elektro-Heizung, unterbindet und den Verbraucher abschaltet, obwohl der Ist-Leistungswert-Wert den Soll-Leistungswert-Wert überschreitet. In diesem Fall wird dem Eingang des Umschalters der Steuereinrichtung kein Steuersignal bzw. keine Steuerspannung mehr zugeführt, so dass das Steuer-Relais in den zweiten Schaltzustand übergeführt und die dritte Signalisierungseinrichtung aktiviert wird. Die Anordnung gemäß dieser Weiterbildung zeigt dem Bediener durch die zeitgleiche Aktivierung der zweiten und dritten Signalisierungseinrichtung an, dass regenerative Energie zur Verfügung steht, die beispielsweise durch das manuelle Betätigen des Betätigungselements vorrangig für weitere Haushaltsgeräte genutzt werden kann.

Bei einer weiteren Ausführungsform der Anordnung sind das Betätigungselement und die zweite und/oder die dritte Signalisierungseinrichtung in einem gemeinsamen Bedienkasten ("control box") angeordnet, wobei der Bedienkasten in signaltechnischer Verbindung mit der Schalt-Einrichtung steht. Der Bedienkasten kann beispielsweise einen Rahmen aufweisen, in den das Betätigungselement (z.B. ein Kippschalter) und die zweite und/oder die dritte Signalisierungseinrichtung integriert sind. Der Bedienkasten kann auf oder unter dem Putz einer Gebäudewand angebracht sein. Der Bedienkasten kann zwar in der Nähe eines Schaltschrankes vorgesehen sein, in dessen Innerem Teile der erfindungsgemäßen Anordnung vorgesehen sind. Da sich der Schaltschrank typischer Weise an einer für einen Bediener nicht bequem zu erreichbaren Stelle, z.B. im Keller, befindet, ist der Bedienkasten vorteilhafter Weise an einer für den Bediener einfacher zugänglichen Stelle im Haus angeordnet. Für die signaltechnische Verbindung des Bedienkastens mit der Schalt-Einrichtung kommen beispielsweise Kabelverbindungen oder dergleichen in Betracht.

Das Steuer-Relais kann beispielsweise innerhalb eines Schaltschranks der Anordnung, z.B. im Bereich der Schalt-Einrichtung angeordnet sein. Bevorzugt ist das Steuer-Relais aber zusammen mit dem Betätigungselement und der zweiten und/oder der dritten Signalisierungseinrichtung in dem Bedienkasten angeordnet.

Die Betätigungseinrichtung ist in vorteilhafter Weise mit dem Steuereingang des Umschalt-Relais verbunden, um dieses vom Ruhezustand in den aktiven Zustand zu schalten. Insbesondere kann das Betätigen der Betätigungseinrichtung eine Umgehung bzw. Überbrückung des Umschalters bewirken, so dass der Eingang des Umschalters direkt mit dem Ausgang des Umschalters verbunden wird, an dem der Steuereingang des Umschalt-Relais angeschlossen ist. Das Umschalt-Relais kann als Steuerelement beispielsweise eine Spule aufweisen oder gegebenenfalls als elektronisches Relais ausgebildet sein.

In einer Ausführungsform umfasst die Anordnung einen Zähler zur Messung der dem Verbraucher über das Umschalt-Relais zugeführten Energie. Bei dem Zähler kann es sich beispielsweise um einen (PTB-)geeichten Zähler handeln, welcher in Anlagen bzw. (Haus-)systemen mit mehreren Parteien beispielsweise auch als Verrechnungs-Einheit für die Heizkosten-Abrechnung verwendet werden kann.

In einer Weiterbildung dieser Ausführungsform ist der Zähler zur Erfassung der dem Verbraucher zugeführten Leistung ausgebildet. Zusätzlich zur Anzeige der an den Verbraucher abgegebenen Energie kann der Zähler ausgebildet sein, als weiteren Parameter im Geräte-Display die momentan an den Verbraucher abgegebene Leistung anzuzeigen. Die vom Verbraucher tatsächlich benötigte Leistung kann von einem Bediener abgelesen werden. Um ein Ablesen der vom Verbraucher benötigten Leistung auch für den Fall zu ermöglichen, dass die von der regenerativen Energiequelle gelieferte Leistung nicht ausreicht, um den Verbraucher einzuschalten, kann die Betätigungseinrichtung kurzzeitig aktiviert werden, um den Verbraucher für die zur Ablesung benötigte Zeitdauer mit Leistung zu versorgen.

In einer weiteren Ausführungsform weist die Schalt-Einrichtung eine Eingabevorrichtung zur Eingabe des Soll-Leistungs-Werts des Verbrauchers auf. Die am Energie- bzw. Leistungszähler abgelesene, vom Verbraucher benötigte Leistung kann mit Hilfe der Eingabevorrichtung als Soll-Leistungs-Wert in die Schalt-Einrichtung eingegeben werden. Es versteht sich, dass die Schalt-Einrichtung typischer Weise auch über ein Display verfügt, an dem der Bediener seine Eingabe überprüfen kann.

In einer weiteren Ausführungsform weist das Umschalt-Relais ein zweites Schaltelement zum Herstellen einer Verbindung eines weiteren Verbrauchers, insbesondere einer Lade-Pumpe zur Aufheizung des Gebrauchswasser-Speichers, mit einer weiteren Energiequelle, insbesondere mit dem öffentlichen Stromnetz, im ersten Schaltzustand des Umschalt-Relais und zum Trennen der Verbindung zu dem weiteren Verbraucher in dem zweiten Schaltzustand des Umschalt-Relais auf. Das Umschalt-Relais dient in diesem Fall zur Umschaltung zwischen dem ersten Schaltzustand (Ruhezustand), bei dem eine Versorgung des weiteren Verbrauchers, beispielsweise der Lade-Pumpe, mit konventioneller Energie erfolgt und in dem der mit regenerativer Energie zu versorgende Verbraucher, z.B. die Elektro-Heizung, deaktiviert ist. Im zweiten, aktiven Schaltzustand des Umschalt-Relais wird die Versorgung des Verbrauchers mit regenerativer Energie aktiviert und die Versorgung des weiteren Verbrauchers mit Netzstrom unterbrochen.

In einer Weiterbildung dieser Ausführungsform sind der Eingang des Umschalters und das zweite Schaltelement des Umschalt-Relais mit einem gemeinsamen Eingang zur Zuführung der Leistung der weiteren Energiequelle verbunden. Wird an dem gemeinsamen Eingang kein Signal bzw. keine Leistung zugeführt, wird nicht nur der weitere Verbraucher nicht mehr mit Leistung versorgt, sondern es wird auch verhindert, dass das Umschalt-Relais vom ersten in den zweiten Schaltzustand umgeschaltet wird.

Dies kann beispielsweise günstig sein, wenn der Gebrauchswasser-Speicher bzw. das darin befindliche Wasser bereits die gewünschte Temperatur aufweist, so dass weder eine Aktivierung der Lade-Pumpe noch der Elektro-Heizung erfolgen muss. Um dies festzustellen, weist die Anordnung vorteilhafter Weise eine Überwachungseinrichtung zur Überwachung der Temperatur des Gebrauchswasser-Speichers auf, die beispielsweise als Regel-Thermostat ausgebildet sein kann. Sofern die gewünschte Temperatur in dem Gebrauchswasser-Speicher erreicht ist, trennt die Überwachungseinrichtung die Verbindung zwischen der weiteren Energiequelle und dem gemeinsamen Eingang.

Bei einer weiteren Ausführungsform weist die Anordnung eine Sicherungs-Einrichtung zur Absicherung der Stromversorgung der Schalt-Einrichtung und des Umschalt-Relais auf. Die Absicherung kann durch eine konventionelle Sicherung erfolgen, welche einen zu hohen Stromfluss durch die elektrischen Bauteile der Anordnung verhindert.

Weitere Vorteile der Erfindung ergeben sich aus der Beschreibung und den Zeichnungen. Ebenso können die vorstehend genannten und noch weiter ausgeführten Merkmale erfindungsgemäß jeweils einzeln für sich oder zu mehreren in beliebigen Kombinationen Verwendung finden. Die gezeigten und verwendeten Ausführungsformen sind nicht als abschließende Aufzählung zu verstehen, sondern haben vielmehr beispielhaften Charakter für die Schilderung der Erfindung.

### Zeichnungen und detaillierte Beschreibung der Erfindung

Die Erfindung ist in den Zeichnungen dargestellt und wird anhand von Ausführungsbeispielen näher erläutert. Es zeigen:
- Fig. 1: einen Schaltschrank und einen Bedienkasten einer Ausführungsform der erfindungsgemäßen Anordnung zum Betreiben einer Elektro-Heizung mit der Leistung einer PV-Anlage,
- Fig. 2: eine Schaltskizze der erfindungsgemäßen Anordnung.

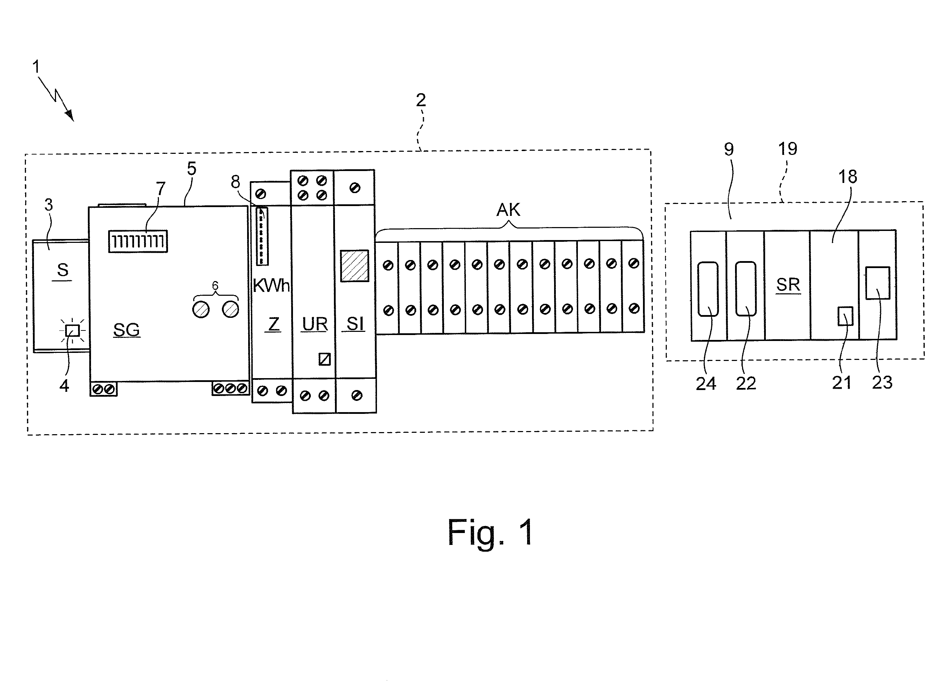

Gemäß Fig. 1 umfasst eine Anordnung 1 (Power-Manager) für das Leistungs-Management einer regenerativen Energiequelle einen Schaltschrank 2 mit mehreren Komponenten. Der Schaltschrank 2 kann beispielsweise zur Aufputz-Montage vorgesehen sein und ist entsprechend (gemäß DIN) montiert und verdrahtet. Der Schaltschrank 2 ist mit einer Sicht-Tür versehen, so dass die Anzeigen der Komponenten (s.u.) problemlos erkennbar sind.

In dem Schaltschrank 2 sind folgende Komponenten vorgesehen: ein Gehäuse 3 mit einer Betätigungseinrichtung in Form eines Schalters S zur manuellen Betätigung sowie mit einer Signalisierungseinrichtung 4 in Form einer Signal-Lampe zur Anzeige des Betätigungszustandes (ein/aus) des Schalters S; eine in einem weiteren Gehäuse 5 untergebrachte Schalt-Einrichtung SG, welche eine Eingabevorrichtung 6 in Form einer Taster-Anordnung aufweist, sowie ein Display 7 zur Anzeige der mittels der Eingabevorrichtung 6 eingegebenen Werte; ein Zähler Z zur Energiemessung mit einer Anzeige 8 für die gemessene Energie; ein Umschalt-Relais UR zum Umschalten zwischen einer konventionellen Energie-Versorgung zur Erwärmung eines Gebrauchswasser-Speichers und einer regenerativen Energie-Versorgung; eine Sicherungs-Einheit SI zur Absicherung der Elektrik; sowie mehrere (im vorliegenden Beispiel zwölf) Anschlussklemmen AK (gemäß DIN).

Neben dem Schaltschrank 2 ist in Fig. 1 ein Bedienkasten 9 dargestellt, in dessen Innerem verschiedene Komponenten in Form von Signalisierungseinrichtungen (21 bis 24) sowie ein Betätigungselement 18 sowie ein Steuer-Relais SR angeordnet sind. Das Innere des Bedienkastens 9 kann, wie bei dem Schaltschrank 2, durch eine Sicht-Tür direkt einsehbar sein, die an einem Gehäuse 19 des Bedienkastens 9 angebracht ist und zur Betätigung des Betätigungselements 18 geöffnet werden kann. Der Bedienkasten 9 kann ebenfalls zur Aufputz-Montage vorgesehen sein und ist entsprechend (gemäß DIN) montiert und verdrahtet. Der Bedienkasten 9 steht in signaltechnischer Verbindung mit dem Schaltschrank 2, insbesondere mit der Schalt-Einrichtung SG in dem Schaltschrank 2. Hierzu sind beispielsweise die Anschlussklemmen AK über (nicht dargestellte) Kabelverbindungen mit dem Bedienkasten 9 direkt verbunden. In der Regel ist der Bedienkasten 9 nicht wie in Fig. 1 gezeigt neben dem Schaltschrank 2, sondern an einer von diesem entfernten Stelle (beispielsweise in einem Zimmer) angeordnet.

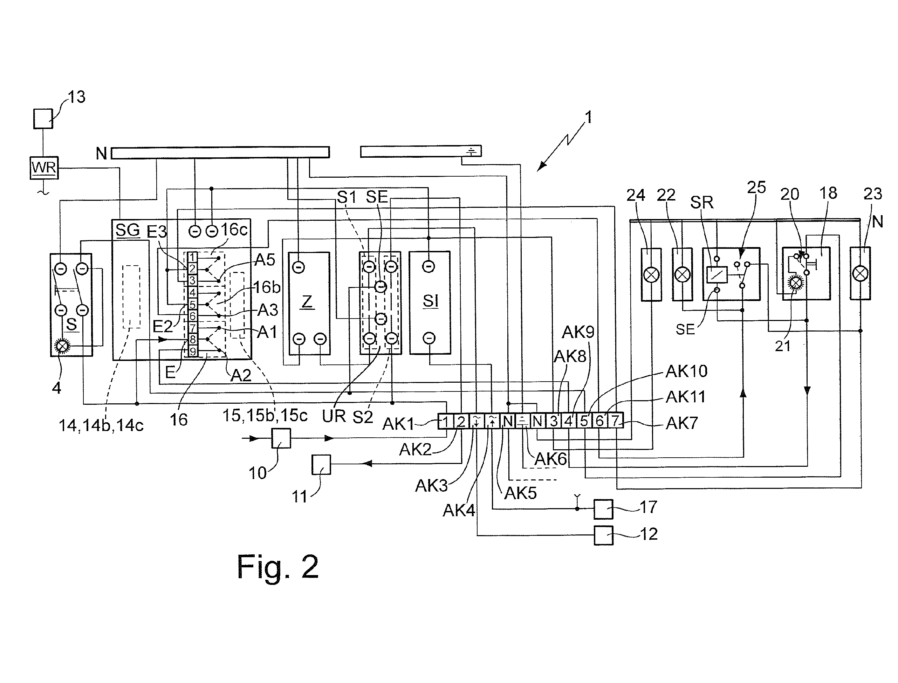

Fig. 2 zeigt eine Schaltskizze der Anordnung 1 von Fig. 1, bei der insbesondere die Verdrahtung der Anschlussklemmen AK1 bis AK12 mit externen, nicht in dem Schaltschrank 2 vorgesehenen Komponenten, wie beispielsweise dem Bedienkasten 9, zu erkennen ist. Einer ersten Anschlussklemme AK1 (bzw. "1") wird über einen Thermostat 10 eine Phase eines Drehstrom-Erzeugers zugeführt. Die Phase wird über ein zweites Schaltelement S2 des Umschalt-Relais UR auf eine zweite Anschlussklemme AK2 (bzw. "2") geführt, die mit einer Lade-Pumpe 11 zum Betrieb einer Warmwasser-Aufbereitung verbunden ist, um Gebrauchswasser in einem (nicht gezeigten) Warmwasser-Speicher zu erwärmen.

Ein Kontakt an einer dritten Anschlussklemme AK3, welche mit einem ersten Schaltelement S1 des Umschalt-Relais UR verbunden ist, dient als Ausgang zur Versorgung einer Elektro-Heizung 12 mit Wechselstrom. Die Elektro-Heizung 12 dient ebenfalls dazu, das Gebrauchswasser in dem Warmwasser-Speicher zu erhitzen.

Ein Kontakt an einer vierten Anschlussklemme AK4 dient als Eingang für eine Wechselspannung, die über einen Knotenpunkt vom öffentlichen Stromnetz 17 und/oder von einem Wechselrichter WR geliefert werden kann, welcher eine von einer PV-Anlage 13 gelieferte Gleichspannung in eine Wechselspannung umsetzt. Die an der vierten Anschlussklemme AK4 bereitgestellte Wechselspannung wird über die Sicherungs-Einrichtung SI, die z.B. eine 20 Ampere-Sicherung aufweisen kann, der Schalt-Einrichtung SG als Versorgungsspannung zur Verfügung gestellt. Es versteht sich, dass bei größeren Nennleistungen der Verbraucher (z.B. von mehr als 4 KW) die Auslegung der elektrischen Komponenten entsprechend anzupassen ist. Die von der Sicherungs-Einrichtung SI abgesicherte Wechselspannung wird zusätzlich über den Zähler Z dem ersten Schaltelement S1 des Umschalt-Relais UR zugeführt.

Eine fünfte Anschlussklemme AK5 dient zum Anschluss eines Null-Leiters "N" und eine sechste Anschlussklemme AK6 als Erdungs-Anschluss.

Die Anordnung 1 wird in zwei Betriebszuständen betrieben. Im ersten Betriebszustand wird die Lade-Pumpe 11 mit der Netzstrom eines Energieversorgers betrieben, während im zweiten Betriebszustand die Elektro-Heizung 12 mit Leistung von der PV-Anlage 13 versorgt wird. Die beiden Betriebszustände der Anordnung 2 entsprechen hierbei zwei Schaltstellungen des Umschalt-Relais UR, wobei in der ersten Schaltstellung das erste Schaltelement S1 geöffnet und das zweite Schaltelement S2 geschlossen ist, während in der zweiten Schaltstellung des Umschalt-Relais UR das erste Schaltelement S1 geschlossen und das zweite Schaltelement S2 geöffnet ist.

Im ersten Schaltzustand des Umschalt-Relais UR (Ruhezustand) liegt an dessen Steuereingang SE keine Spannung an, so dass ein Steuerelement (Spule) des Umschalt-Relais nicht anzieht. Im zweiten Schaltzustand fließt ein Strom durch den Steuereingang bzw. den Steuerstromkreis und aktiviert das Steuerelement (die Spule).

Zur Steuerung des Schaltens des Umschalt-Relais UR zwischen dem ersten und dem zweiten Schaltzustand dient die Schalt-Einrichtung SG. Zu diesem Zweck wird der Schalt-Einrichtung SG ein Daten-Protokoll-Signal vom Wechselrichter WR zur Verfügung gestellt, aus dem die Schalt-Einrichtung SG einen momentanen Ist-Leistungs-Wert der von der PV-Anlage 13 gelieferten Leistung extrahiert. Dieser Ist-Leistungs-Wert wird in einer Vergleichseinrichtung 14 der Schalt-Einrichtung SG permanent mit einem Soll-Leistungs-Wert für den Verbraucher, im vorliegenden Fall für die Elektro-Heizung 12, verglichen.

Eine Steuereinheit 15 der Schalt-Einrichtung SG dient zur Steuerung eines Umschalters 16 in Form eines Relais zwischen dem ersten Schaltzustand (Ruhezustand), in dem ein Eingang E des Umschalters 16 mit einem ersten Ausgang A1 verbunden ist und einem zweiten Schaltzustand (aktiver Zustand), in dem der Eingang E mit einem zweiten Ausgang A2 verbunden ist. Es versteht sich, dass der Umschalter 16, wie in Fig. 2 gezeigt, in die Schalt-Einrichtung SG integriert sein kann, dass dieser aber auch als eine separate Baugruppe ausgeführt sein kann.

Überschreitet der Ist-Leistungs-Wert den Soll-Leistungs-Wert, verbindet der Umschalter 16 den Eingang E mit dem zweiten Ausgang A2 wodurch im Normalbetrieb (abweichender Betrieb s.u.) eine elektrische Verbindung zu einem Steuereingang SE des Umschalt-Relais UR hergestellt wird. In diesem Fall wird der Steuereingang SE des Umschalt-Relais UR mit der Spannung bzw. mit dem Signal beaufschlagt, welches an der ersten Anschlussklemme AK1 anliegt. Hierbei geht das Umschalt-Relais UR vom ersten in den zweiten Schaltzustand über, bei dem die Elektro-Heizung 12 mit der in ausreichendem Maße vorhandenen Leistung der PV-Anlage 13 betrieben wird, wobei gleichzeitig die Lade-Pumpe 11 abgeschaltet wird, da das zweite Schaltelement S2 geöffnet wird.

Kann die PV-Anlage 13 die zum Betrieb der Elektro-Heizung 12 erforderliche Leistung nicht mehr erbringen, z.B. durch witterungsbedingte Umstände, fällt der Ist-Leistungs-Wert unter den Soll-Leistungs-Wert, die Verbindung zwischen dem Eingang E und dem zweiten Ausgang A2 des Umschalters 16 wird unterbrochen und die Anlage 1 kehrt in den ersten Betriebszustand zurück, bei dem der Gebrauchswasser-Speicher von der Lade-Pumpe 11 und nicht von der Elektro-Heizung 12 mit Leistung versorgt wird.

Um zu vermeiden, dass die Lade-Pumpe 11 oder die Elektro-Heizung 12 auch dann noch mit Leistung versorgt werden, wenn das Brauchwasser in dem Wasser-Speicher die gewünschte Temperatur erreicht hat, unterbricht in diesem Fall der als Überwachungseinrichtung dienende Thermostat 10 die Zufuhr der Spannung zur ersten Anschlussklemme AK1. Da hierbei keine Spannung am Eingang E des Umschalters 16 bereitgestellt wird, kann auch für den Fall, dass der Ist-Leistungs-Wert den Soll-Leistungs-Wert überschreitet das Umschalt-Relais UR nicht vom Ruhezustand in den aktiven Schaltzustand umschalten.

Der Ausgang A2 des Umschalters 16 ist mit dem Steuereingang SE des Umschalt-Relais UR über eine Anschlussklemme AK9, das als Schalter ausgebildete Betätigungselement 18 des Bedienkastens 9 sowie eine weitere Anschlussklemme AK10 verbunden. In dem Betätigungselement 18 ist ein Schalter 20 vorgesehen, der bei der Betätigung des Betätigungselements 18 die Verbindung zwischen der Anschlussklemme AK9 und der Anschlussklemme AK10 trennt. In dem Betätigungselement 18 ist eine vierte Signalisierungseinrichtung 21 zur Anzeige des Betätigungszustands des Betätigungselements 18 angeordnet, die beispielsweise als LED-Leuchte ausgebildet sein kann, welche beim Betätigen des Betätigungselements 18 z.B. rot leuchtet. Ist die Verbindung zwischen dem Ausgang A2 des Umschalters 16 und dem Steuereingang SE des Umschalt-Relais UR durch das manuelle Betätigen des Betätigungselements 18 unterbrochen, so liegt auch für den Fall, dass der Ist-Leistungs-Wert größer als der Soll-Leistungs-Wert ist, an dem Steuereingang SE des Umschalt-Relais UR keine Spannung an, so dass das Umschalt-Relais UR von dem zweiten Schaltzustand des Umschalt-Relais UR in den ersten Schaltzustand des Umschalt-Relais UR zurückschaltet und dadurch die Elektro-Heizung 12 von der PV-Anlage 13 trennt. Diese Trennung erfolgt unabhängig davon, ob in diesem Betriebszeitpunkt der Ist-Leistungswert-Wert größer als der Soll-Leistungswert-Wert ist.

Durch die Aktivierung des Betätigungselements 18 kann die zur Verfügung stehende Photovoltaik-Leistung gezielt (priorisiert) anderen Verbrauchern als der Elektro-Heizung 12, beispielsweise nicht dargestellten Haushaltsgeräten, zur Verfügung gestellt werden. Die Aktivierung dieser Haushaltsgeräte erfolgt hierbei typischer Weise manuell durch einen Bediener, z.B. durch eine Hausfrau. Um zu entscheiden, ob die Anordnung 1 im Normalbetrieb oder durch Aktivierung des Betätigungselements 18 zum priorisierten Betrieb weiterer Verbraucher genutzt werden soll, dienen die zweite und die dritte Signalisierungseinrichtung 22, 23 des Bedienkastens 9, wie nachfolgend im Einzelnen erläutert wird.

Zur Schaltung der zweiten Signalisierungseinrichtung 22 zwischen einem aktiven und einem inaktiven Zustand sind in der Schalt-Einheit SG ein zweiter Umschalter 16b sowie eine zweite Vergleichseinrichtung 14b zum Vergleichen des Ist-Leistungs-Wertes mit dem Soll-Leistungs-Wert der Elektro-Heizung 12 sowie eine zweite Steuereinrichtung 15b vorgesehen, die zum Verbinden eines Eingangs E2 des zweiten Umschalters 16b mit einem zweiten Ausgang A3 des zweiten Umschalters 16b dient, wenn der Ist-Leistungs-Wert den Soll-Leistungs-Wert überschreitet. Der Eingang E2 des zweiten Umschalters 16b ist über die Sicherungs-Einheit SI mit dem öffentlichen Stromnetz 17 verbunden. Der Ausgang A3 des zweiten Umschalters 16b ist über eine Anschlussklemme AK6 zu einer zweiten Signalisierungseinrichtung 22 geführt.

Ist der Ist-Leistungswert-Wert größer als der Soll-Leistungs-Wert der Elektro-Heizung 12, so registriert dies die zweite Vergleichseinrichtung 14b und die zweite Steuereinrichtung 15b verbindet den Eingang E2 des zweiten Umschalters 16b mit dem zweiten Ausgang A3 des zweiten Umschalters 16b. Dadurch wird zwischen dem öffentlichen Stromnetz 17 bzw. der Anschlussklemme AK4 und einem Null-Leiter N ein (zweiter) Stromkreis geschlossen, in dem die zweite Signalisierungseinrichtung 22 angeordnet ist, so dass die Signalisierungseinrichtung 22, die beispielweise in Form einer LED ausgebildet sein kann, aktiviert wird und z.B. mit gelber Farbe leuchtet.

Fällt der Ist-Leistungs-Wert unter den Soll-Leistungs-Wert, so wird dies von der zweiten Vergleichseinrichtung 14b registriert und die zweite Steuereinheit 15b trennt den Eingang E2 des zweiten Umschalters 16b von dem zweiten Ausgang A3 des zweiten Umschalters 16b. Der zweite Stromkreis ist somit unterbrochen und die zweite Signalisierungseinrichtung 22 erlischt bzw. ist inaktiv. Durch eine aktive zweite Signalisierungseinrichtung 22 wird dem Bediener der Anordnung 1, genauer gesagt des Bedienkastens 9 somit angezeigt, dass der Ist-Leistungs-Wert größer ist als der Soll-Leistungs-Wert und Photovoltaik-Leistung in einem Maße zur Verfügung steht, die ausreicht, um die Elektro-Heizung 12 zu nutzen, ohne dabei auf das öffentliche Stromnetz 17 zurückgreifen zu müssen. Ist die zweite Signalisierungseinrichtung 22 inaktiv, so ist das ein Hinweis darauf, dass momentan der Ist-Leistungswert kleiner ist als der Soll-Leistungswert, d.h. dass keine Photovoltaik-Leistung in ausreichender Menge bereitsteht und daher die Aufheizung des Gebrauchswassers über die Lade-Pumpe 11 erfolgt, die vom öffentlichen Stromnetz 17 gespeist wird.

Bei der in Fig. 2 beschriebenen Ausführungsform entsprechen sich die Soll-Leistungs-Werte des Umschalters 16 und des zweiten Umschalters 16b. Dann bewirkt im Normalfall (Anschlussklemme AK1 stromführend und Betätigungselement 18 nicht betätigt) ein Überschreiten des Soll-Leistungs-Werts ein zeitgleiches (synchrones) Umschalten des Umschalters 16 und des zweiten Umschalters 16b. Dadurch wird zeitgleich zum einen die Lade-Pumpe 11 vom öffentlichen Stromnetz 17 getrennt und die Elektro-Heizung 12 mit der regenerativen Energie der PV-Anlage 13 versorgt sowie die zweite Signalisierungseinrichtung 22 aktiviert. Es versteht sich aber, dass die Soll-Leistungs-Werte der Umschalter 16, 16b auch unterschiedlich gewählt werden können. Beispielsweise kann an der Vergleichseinrichtung 14 ein erster Soll-Leistungs-Wert und an der zweiten Vergleichseinrichtung 14b ein zweiter, beispielsweise höher liegender, Soll-Leistungs-Wert eingestellt werden.

Für die Ansteuerung der dritten Signalisierungseinrichtung 23 sind in der Schalt-Einheit SG ein dritter Umschalter 16c sowie eine dritte Vergleichseinrichtung 14c zum Vergleichen des Ist-Leistungs-Wertes mit einem weiteren Soll-Leistungs-Wert vorgesehen, der größer ist als der Soll-Leistungs-Wert der Elektro-Heizung 12. Weiterhin ist eine dritte Steuereinrichtung 15c vorgesehen, die zum Verbinden eines Eingangs E3 des dritten Umschalters 16c mit einem zweiten Ausgang A5 des dritten Umschalters 16c dient, wenn der Ist-Leistungs-Wert den weiteren Soll-Leistungs-Wert überschreitet. Der Eingang E3 des dritten Umschalters 16c ist ebenfalls über die Sicherungs-Einheit SI mit dem öffentlichen Stromnetz 17 verbunden. Der zweite Ausgang A5 des dritten Umschalters 16c ist über eine Anschlussklemme AK7 zu der dritten Signalisierungseinrichtung 23 geführt.

Ist der Ist-Leistungswert-Wert größer als der weitere Soll-Leistungs-Wert, so wird dies von der dritten Vergleichseinrichtung 14c erkannt und die dritte Steuereinrichtung 15c verbindet den Eingang E3 des dritten Umschalters 16c mit dem zweiten Ausgang A5 des dritten Umschalters 16c. Zwischen dem öffentlichen Stromnetz 17 bzw. der Anschlussklemme AK7 und einem Null-Leiter N wird hierbei ein (dritter) Stromkreis geschlossen, in dem die dritte Signalisierungseinrichtung 23 angeordnet ist, so dass die Signalisierungseinrichtung 23, die beispielweise in Form einer LED ausgebildet sein kann, aktiviert wird und z.B. mit grüner Farbe leuchtet. Fällt der Ist-Leistungs-Wert unter den weiteren Soll-Leistungs-Wert, so wird dies von der dritten Vergleichseinrichtung 14c registriert und die dritte Steuereinheit 15c trennt den Eingang E3 des dritten Umschalters 16c von dem zweiten Ausgang A5 des dritten Umschalters 16c. Dann ist der dritte Stromkreis unterbrochen und die dritte Signalisierungseinrichtung 23 (die grüne LED) erlischt bzw. ist inaktiv.

Durch eine aktive dritte Signalisierungseinrichtung 23 wird dem Bediener angezeigt, dass der Ist-Leistungs-Wert größer ist als der weitere Soll-Leistungs-Wert und die Photovoltaik-Leistung in einem Maße zur Verfügung steht, die nicht nur ausreicht die Elektro-Heizung 12 mit Leistung zu versorgen, sondern darüber hinaus auch noch weitere Verbraucher, insbesondere Haushaltsgeräte, mit einem gegebenenfalls höheren Leistungsbedarf zu betreiben. Die Einstellung des weiteren Soll-Leistungs-Wertes kann entsprechend der im Haushalt vorhandenen Haushaltsgeräte und deren individuellem Leistungsbedarf eingestellt werden und beispielsweise 4 kW oder (unter Verwendung eines Zusatz-Relais) 10 kW über dem Soll-Leistungs-Wert der Elektro-Heizung 12 liegen.

Ist der Ist-Leistungs-Wert größer als der weitere Soll-Leistungs-Wert, so kann der Bediener durch ein Betätigen des Betätigungselements 18 die standardmäßig mit regenerativer Energie betriebene Elektro-Heizung 12 abschalten, wodurch die gesamte Leistung der PV-Anlage 13 den weiteren Haushaltsgeräten zur Verfügung gestellt werden kann, ohne dabei auf konventionelle Energiequellen, wie beispielsweise das öffentliche Netz, zurückgreifen zu müssen.

Zur Ansteuerung der dritten Signalisierungseinrichtung 23 umfasst die Anordnung 1, genauer gesagt der Bedienkasten 9, ferner ein Steuer-Relais SR mit einem Steuereingang SE. Dieser Steuereingang SE des Steuer-Relais SR ist mit dem Ausgang A2 des Umschalters 16 der Steuereinrichtung 15 verbunden. Das Steuer-Relais SR kann über den Steuereingang SE zwischen einem ersten und einem zweiten Schaltzustand umgeschaltet werden, wobei die Signalisierungseinrichtung 23 in dem zweiten Schaltzustand des Steuer-Relais SR aktiv ist. In dem ersten Schaltzustand des Steuer-Relais SR ist die dritte Signalisierungseinrichtung 23 entweder aktiv oder inaktiv, je nachdem, ob der Ist-Leistungs-Wert größer oder kleiner ist als der weitere Soll-Leistungs-Wert (s.o.).

Die Verbindung zwischen dem Steuereingang SE des Steuer-Relais SR und dem Ausgang A2 des Umschalters 16 ist in dem ersten Schaltzustand stromführend (sofern das Betätigungselement 18 nicht aktiviert ist), so dass die Verbindung zwischen der dritten Signalisierungseinrichtung 23 und dem zweiten Ausgang A3 des zweiten Umschalters 16b getrennt ist. In dem zweiten Schaltzustand des Steuer-Relais SR ist die Verbindung zwischen dem Steuereingang SE des Steuer-Relais SR und dem zweiten Ausgang A2 des Umschalters 16 (über eine Anschlussklemme AK 11) stromlos und das Steuer-Relais SR verbindet die dritte Signalisierungseinrichtung 23 mit dem zweiten Ausgang A3 des zweiten Umschalters 16b.

Ist die Elektro-Heizung 12 abgeschaltet, obwohl der Ist-Leistungs-Wert größer ist als der Soll-Leistungs-Wert (ein solcher Fall kann beispielsweise eintreten, wenn das Gebrauchswasser durch den Aufwärmvorgang seine Ziel-Temperatur erreicht hat, so dass eine Überwachungseinrichtung (der Thermostat 10) die Elektro-Heizung 12 abschaltet, indem sie die Zufuhr der Spannung zur ersten Anschlussklemme AK 1 unterbricht), so bleibt einerseits die zweite Signalisierungseinrichtung 22 dennoch aktiv, da diese mit dem zweiten Ausgang A3 des zweiten Umschalters 16b verbunden ist. Andererseits ist zwar der Eingang E des Umschalters 16 mit dem zweiten Ausgang A2 des Umschalters 16 verbunden, jedoch ist die Verbindung zwischen dem zweiten Ausgang A2 des zweiten Umschalters 16 und dem Steuereingang SE des Steuer-Relais SR dennoch stromlos, da die Zufuhr der Spannung zur ersten Anschlussklemme AK 1 durch den Thermostat 10 unterbrochen ist. Dies führt dann dazu, dass das Steuer-Relais SR in den zweiten Schaltzustand schaltet, wodurch zusätzlich zur zweiten Signalisierungseinrichtung 22 auch die dritte Signalisierungseinrichtung 23 aktiviert wird. Dies zeigt dem Bediener an, dass nicht genutzte und ins öffentliche Stromnetz eingespeiste Leistung aus der PV-Anlage 13 zur Verfügung steht, die für weitere Verbraucher, insbesondere für Haushaltsgeräte, genutzt werden kann.

Um die Betriebsbereitschaft der Anordnung 1 anzuzeigen, umfasst der Bedienkasten 9 ferner eine fünfte Signalisierungseinrichtung 24, die über das öffentliche Stromnetz 17, die Sicherungs-Einheit SI sowie eine Anschlussklemme AK8 an einen Null-Leiter N angeschlossen ist und somit einen geschlossenen Stromkreis bildet, wenn die Stromversorgung über die Sicherungs-Einheit SI gewährleistet ist. Ist die Anordnung 1 betriebsbereit bzw. im Standby-Modus, so ist die fünfte Signalisierungseinrichtung 24 dauerhaft aktiviert. Die fünfte Signalisierungseinrichtung 24 kann beispielsweise als Lampe oder Leuchte (insbesondere als LED) ausgebildet sein.

Obgleich die Signalisierungseinrichtungen 4, 21 bis 24 in Fig. 1 bzw. in Fig. 2 in Form von LEDs bzw. von Lampen dargestellt sind, können die Signalisierungseinrichtungen selbstverständlich auch auf andere Weise ausgebildet sein und z.B. als graphische Symbole an einem Display ausgebildet sein, wobei ein jeweiliger Zustand (aktiv / passiv) einer Signalisierungseinrichtung durch eine entsprechende graphische Gestaltung des zugehörigen Symbols erfolgen kann.

Obgleich der Betrieb der Elektro-Heizung 12 zur Erwärmung von Gebrauchs-Wasser nur erfolgen sollte, wenn die von der Elektro-Heizung 12 benötigte Leistung vollständig von der PV-Anlage 13 bereitgestellt werden kann, ist es in bestimmten Fällen günstig, unabhängig von der Leistung, die von der PV-Anlage 13 aktuell geliefert wird, in den zweiten Schaltzustand des Umschalt-Relais UR überzugehen und die Elektro-Heizung 13 gegebenenfalls (zumindest teilweise) mit Leistung aus dem öffentlichen Stromnetz 17 zu betreiben.

Dies wird durch die manuell betätigbare Betätigungseinrichtung in Form des Schalters S ermöglicht, der eine direkte Verbindung zwischen dem zweiten Ausgang A2 des Umschalters 16 und dessen Eingang E bzw. zur ersten Anschlussklemme AK1 herstellt, so dass das dort anliegende Signal direkt mit dem Steuereingang SE des Umschalt-Relais UR verbunden wird.

Der Schalter S kann manuell aktiviert werden, beispielsweise um einen Probelauf durchzuführen, bei dem die Elektro-Heizung 12 mit Leistung beaufschlagt wird, die an der Anzeige 8 des Zählers Z als einer von mehreren Parametern abgelesen werden kann. Der abgelesene Wert kann mittels der Eingabevorrichtung 6 an der Schalt-Einrichtung SG als Soll-Leistungs-Wert bzw. als Schaltpunkt eingegeben werden und am Display 7 der Schalt-Einrichtung SG kann die Eingabe überprüft werden. Der auf diese Weise bestimmte Soll-Leistungs-Wert ist in der Regel genauer als der vom Hersteller angegebene Leistungs-Wert eines jeweiligen elektrischen Verbrauchers.

Ein zweiter Fall, bei dem es günstig ist, die Elektro-Heizung 12 durch Betätigen des Schalters S unabhängig von der momentan von der PV-Anlage 13 gelieferten Leistung zu aktivieren, besteht in einer Not-Einschaltung zur Aufheizung des Warmwasser-Speichers für den Fall, dass die Lade-Pumpe 11 ausfällt. Durch die Not-Einschaltung kann bis zur Reparatur bzw. bis zum Austausch der Lade-Pumpe 11 eine Versorgung mit Gebrauchs-Wasser erfolgen, das durch die Elektro-Heizung 12 erwärmt wird. Die Not-Einschaltung ermöglicht somit eine zusätzliche Absicherung der Warmwasser-Versorgung eines Haushalts bzw. eines Gewerbe-Betriebs.

Der Einsatz der Anordnung 1 wurde in Fig. 2 beispielhaft im Zusammenhang mit dem Betrieb einer PV-Anlage zur Erwärmung von Gebrauchs-Wasser durch eine Elektro-Heizung beschrieben. Wie oben dargestellt wurde kann die oben beschriebene Anordnung auch zum Betrieb von anderen Hausgeräten, z.B. von Waschmaschinen, Trocknern oder von sonstigen elektrischen Verbrauchern im Haushalt oder zum Betrieb von elektrischen Verbrauchern in Gewerbe-Betrieben, beispielsweise zum Betrieb von elektrischen Aggregaten für Prozess-Anlagen (z.B. zur Trocknung etc.) zum Einsatz kommen. Bei der oben beschriebenen Anordnung 1 wird nur eine Phase für den Betrieb der Verbraucher verwendet, es versteht sich aber, dass die Anordnung für den Betrieb von Verbrauchern mit unterschiedlicher Phase bzw. eines Verbrauchers, dem mehrere Phasen zugeführt werden, geeignet modifiziert werden kann.

Zu diesem Zweck kann zusätzlich zum Umschalt-Relais UR noch ein oder zwei weitere Umschalt-Relais vorgesehen werden, die über die zweite Vergleichseinrichtung 14b, den zweiten Umschalter 16b sowie die zweite Steuereinrichtung 15b bzw. über die dritte Vergleichseinrichtung 14c, den dritten Umschalter 16c sowie die dritte Steuereinrichtung 15c zwischen einem ersten und einem zweiten Schaltzustand umgeschaltet werden können, sofern der jeweilige Ist-Leistungs-Wert den zugehörigen Soll-Leistungs-Wert überschreitet. Insbesondere können auf diese Weise ein- und demselben Verbraucher (mit typischer Weise gleichem Soll-Leistungswert für jede Phase) über die drei Umschalt-Relais drei Drehstrom-Phasen zugeführt werden. Für jede Phase kann in der Anlage 1 ein eigener 1-Phasen-Zähler Z vorgesehen sein. Alternativ kann ein 3-Phasen-Zähler verwendet werden, welcher die dem bzw. den Verbrauchern zugeführte Gesamt-Energie misst.

Selbstverständlich kann die Anordnung 1 auch in Verbindung mit anderen regenerativen Energiequellen, z.B. Windkraft-Anlagen, Wasserkraft-Anlagen etc. eingesetzt werden. In allen diesen Fällen kann auf die oben beschriebene Weise ein unwirtschaftlicher Betrieb der Verbraucher mit dem Strom des öffentlichen Stromnetzes verhindert werden.

## Patentansprüche

1. Anordnung (1) zum Betreiben eines Verbrauchers (12), insbesondere einer Elektro-Heizung für einen Gebrauchswasser-Speicher, mit elektrischer Leistung einer regenerativen Energiequelle (13), insbesondere einer Photovoltaikanlage, umfassend:
eine Schalt-Einrichtung (SG), welche umfasst:
eine Vergleichseinrichtung (14) zum Vergleichen eines Ist-Leistungs-Werts der von der Energiequelle (13) gelieferten Leistung mit einem Soll-Leistungs-Wert des Verbrauchers (12),
einen Umschalter (16), sowie
eine Steuereinrichtung (15) zum Verbinden eines Eingangs (E) des Umschalters (16) mit einem Ausgang (A2) des Umschalters (16),
wenn der Ist-Leistungs-Wert den Soll-Leistungs-Wert überschreitet,
ein Umschalt-Relais (UR), umfassend:
einen mit dem Ausgang (A2) des Umschalters (16) verbundenen Steuereingang (SE) zum Umschalten zwischen einem ersten und
einem zweiten Schaltzustand des Umschalt-Relais (UR),
einem ersten Schaltelement (S1) zur Trennung des Verbrauchers (12) von der Energiequelle (13) in dem ersten Schaltzustand und zur Verbindung des Verbrauchers (12) mit der Energiequelle (13) in dem zweiten Schaltzustand, sowie
ein Betätigungselement (18) zum manuellen Umschalten des Umschalt-Relais (UR) von dem zweiten Schaltzustand in den ersten Schaltzustand zur Trennung des Verbrauchers (12) von der Energiequelle (13) unabhängig vom Ist-Leistungs-Wert der Energiequelle (13) und/oder
eine Betätigungseinrichtung (S) zum manuellen Betätigen des Umschalt-Relais (UR) zum Umschalten von dem ersten Schaltzustand in den zweiten Schaltzustand unabhängig vom Ist-Leistungs-Wert der Energiequelle (13).

2. Anordnung nach Anspruch 1, bei der das Betätigungselement (18) beim manuellen Umschalten die Verbindung zwischen dem Ausgang (A2) des Umschalters (16) und dem Steuereingang (SE) des Umschalt-Relais (UR) unterbricht.

3. Anordnung nach Anspruch 1 oder 2, bei der die Schalt-Einrichtung (SG) weiter umfasst:
eine zweite Vergleichseinrichtung (14b) zum Vergleichen des Ist-Leistungs-Wertes mit dem Soll-Leistungs-Wert,
einen zweiten Umschalter (16b),
eine zweite Steuereinrichtung (15b) zum Verbinden eines Eingangs (E2) des zweiten Umschalters (16b) mit einem Ausgang (A3) des zweiten Umschalters (16b), wenn der Ist-Leistungs-Wert den Soll-Leistungs-Wert überschreitet, sowie
eine zweite Signalisierungseinrichtung (22), die beim Verbinden des Eingangs (E2) mit dem Ausgang (A3) des zweiten Umschalters (15b) aktiviert wird.

4. Anordnung nach einem der vorhergehenden Ansprüche, bei der die Schalt-Einrichtung (SG) weiter umfasst:
eine dritte Vergleichseinrichtung (14c) zum Vergleichen des Ist-Leistungs-Werts mit einem weiteren Soll-Leistungs-Wert, der größer ist als der Soll-Leistungs-Wert des Verbrauchers (12),
einen dritten Umschalter (16c),
eine dritte Steuereinrichtung (15c) zum Verbinden eines Eingangs (E3) des dritten Umschalters (16c) mit einem Ausgang (A5) des dritten Umschalters (16c), wenn der Ist-Leistungs-Wert den weiteren Soll-Leistungs-Wert überschreitet, sowie eine dritte Signalisierungseinrichtung (23), die beim Verbinden des Eingangs (E3) mit dem Ausgang (A5) des dritten Umschalters (16c) aktiviert wird.

5. Anordnung nach Anspruch 4, weiter umfassend: ein Steuer-Relais (SR) mit einem mit dem Ausgang (A2) des Umschalters (16) der Steuereinrichtung (15) verbundenen Steuereingang (SE) zum Umschalten zwischen einem ersten und einem zweiten Schaltzustand des Steuer-Relais (SR), wobei in dem zweiten Schaltzustand die dritte Signalisierungseinrichtung (23) aktiv ist.

6. Anordnung nach einem der vorhergehenden Ansprüche, bei der das Betätigungselement (18) und die zweite und/oder die dritte Signalisierungseinrichtung (22,23) in einem gemeinsamen Bedienkasten (9) angeordnet sind, wobei der Bedienkasten (9) in signaltechnischer Verbindung mit der Schalt-Einrichtung (SG) steht.

7. Anordnung nach einem der vorhergehenden Ansprüche, bei welcher die Betätigungseinrichtung (S) mit dem Steuereingang (SE) des Umschalt-Relais (UR) verbunden ist.

8. Anordnung nach einem der vorhergehenden Ansprüche, weiter umfassend: einen Zähler (Z) zur Messung der dem Verbraucher (12) über das Umschalt-Relais (UR) zugeführten Energie.

9. Anordnung nach Anspruch 8, bei welcher der Zähler (Z) zur Erfassung der dem Verbraucher (12) zugeführten Leistung ausgebildet ist.

10. Anordnung nach einem der vorhergehenden Ansprüche, bei welcher die Schalt-Einrichtung (SG) eine Eingabevorrichtung (6) zur Eingabe des Soll-Leistungs-Werts des Verbrauchers (12) aufweist.

11. Anordnung nach einem der vorhergehenden Ansprüche, bei welcher das Umschalt-Relais (UR) ein zweites Schaltelement (S2) zum Herstellen einer Verbindung eines weiteren Verbrauchers (11), insbesondere einer Lade-Pumpe zur Aufheizung des Gebrauchswasser-Speichers, mit einer weiteren Energiequelle, insbesondere mit dem öffentlichen Stromnetz (17), im ersten Schaltzustand des Umschalt-Relais (UR) und zum Trennen der Verbindung zu dem weiteren Verbraucher (11) in dem zweiten Schaltzustand des Umschalt-Relais (UR) aufweist.

12. Anordnung nach Anspruch 11, bei welcher der Eingang (E) des Umschalters (16) und das zweite Schaltelement (S2) des Umschalt-Relais (UR) mit einem gemeinsamen Eingang (AK1) zur Zuführung der Leistung der weiteren Energiequelle verbunden sind.

13. Anordnung nach Anspruch 12, weiter umfassend: eine Überwachungseinrichtung (10) zur Überwachung der Temperatur des Gebrauchswasser-Speichers und zur Trennung der Verbindung zwischen der weiteren Energiequelle und dem gemeinsamen Eingang (AK1), wenn im Gebrauchswasser-Speicher eine gewünschte Temperatur erreicht ist.

14. Anordnung nach einem der vorhergehenden Ansprüche, weiter umfassend: eine Sicherungs-Einrichtung (SI) zur Absicherung der Stromversorgung der Schalt-Einrichtung (SG) und des Umschalt-Relais (UR).
